# EUROPÄISCHE PATENTSCHRIFT

(11) **EP 2 208 086 B1**
(45) Veröffentlichungstag und Bekanntmachung des Hinweises auf die Patenterteilung: **01.05.2013**
(21) Anmeldenummer: 08805170.1
(22) Anmeldetag: 09.10.2008
(51) Int. Cl.: G01S 13/93, G01S 15/93, G10K 11/32, G01S 7/282, G01S 7/524

(54) **ÜBERWACHUNGSEINRICHTUNG FÜR DEN TOTEN WINKEL BEI FAHRZEUGEN SOWIE VERFAHREN**
MONITORING DEVICE FOR THE BLIND SPOT OF VEHICLES AND METHOD
DISPOSITIF DE SURVEILLANCE DES ANGLES MORTS DANS DES VÉHICULES, ET PROCÉDÉ ASSOCIÉ

(30) Priorität: 07.11.2007 DE 102007053033
(43) Veröffentlichungstag der Anmeldung: 21.07.2010
(73) Patentinhaber: Robert Bosch GmbH, 70442 Stuttgart (DE)
(72) Erfinder: BAYARSAIKHAN, Bayar, 71229 Leonberg (DE); BECKER, Markus, 70435 Stuttgart (DE); FEHSE, Meike, 71254 Ditzingen (DE); SCHNEIDER, Marcus, 71642 Ludwigsburg (DE)
(86) Internationale Anmeldenummer: PCT/EP2008/063522
(87) Internationale Veröffentlichungsnummer: WO 2009/059861

(56) Entgegenhaltungen:
- EP-A- 0 849 825
- EP-A2- 0 409 360
- WO-A-84/04174
- DE-A1- 4 228 794
- GB-A- 1 350 549
- US-A- 5 905 457

## Beschreibung

### Stand der Technik

Die Erfindung geht aus von einer Überwachungseinrichtung oder einem Verfahren nach Gattung der unabhängigen Ansprüche.

Tote-Winkel-Überwachungssysteme geben dem Fahrer eines Fahrzeugs einen Hinweis, wenn sich ein anderes Fahrzeug oder ein stehendes Objekt innerhalb des Toten Winkels des eigenen Fahrzeugs befindet.

Aus der WO 2005/103757 A1 ist ein Radarsystem im rückwärtigen Bereich eines Fahrzeugs bekannt, welches zwei Radarsensoren aufweist, die sektorförmige sich teilweise überlappende Strahlcharakteristiken besitzen. Die Signale dieser beiden Radarsensoren werden zusammen ausgewertet, um den "Blind-Spot" (Toter Winkel) zu überwachen. Ein ähnliches System ist aus der EP 1118 018 B1 A1 bekannt.

Bei der EP 1118 018 B1 werden zwei solcher Radarsensoren mit ebenfalls sektorieller Strahlcharakteristik zusammen ausgewertet, um durch einen Vergleich der Detektionssignale falsche Alarme auszuschließen.

Bei der DE 42 28 794 A1 werden zur Überwachung des Toten Winkels Videokameras, temperaturempfindliche Sensoren oder Ultraschalldetektoren verwendet. Eine Anzeige für den Fahrer findet dort nur dann statt, wenn der Fahrtrichtungsanzeiger betätigt wird.

Bei der WO 84/04174 ist eine berührungslose Abstandsmessung für Fahrzeuge vorgesehen, deren Messstrahl seitlich zur Überholspur gerichtet ist, um den toten rückwärtigen Sichtbereich gegenüber den vorhandenen Rück- bzw. Seitenspiegeln zu erfassen. Wird ein Fahrzeug auf der Überholspur erfasst, so kann dem Fahrer dies durch ein optisches und/oder akustisches Signal angezeigt werden.

Aus der EP 0 409 360 A2 ist eine Vorrichtung für eine Tonübertragung für ein stereophonisches Lautsprechersystem bekannt, welche die Raumakustik für den Hörer verbessern soll. Hierzu sind Mittel vorgesehen, welche die Wirkung des sogenannten Haas-Effekts verringern. Es handelt sich bei diesem Effekt, der auch oft mit dem Präzedenz-Effekt in Verbindung gebracht wird, um einen psychoakustischen Effekt, bei dem das Hörsystem den zuerst am Gehör eintreffenden Direktschall bei der Bestimmung der Richtung eines Hörereignisses stärker berücksichtigt, als die zeitlich später eintreffenden Rückwürfe. Um eine Verringerung des Effekts zu erreichen, werden hierzu als ein mögliches Ausführungsbeispiel für Mittel- und Hochfrequenzbereiche asymmetrische Trichter als Mittel verwendet. Hierdurch kann eine vorteilhafte Richtcharakteristik erreicht werden.

Bei der GB 1350549 ist Vorrichtung vorgesehen, welche die benötigte Abstrahlungscharakteristik einer Bodenantenne für Blindlandeverfahren für Flugzeuge bereitstellt. Dies wird durch eine dielektrische Linse erreicht, die unterschiedliche dielektrische Konstanten und einen bestimmten Aufbau aufweisen kann, bspw. an einer Seite konisch zuläuft. Durch die unterschiedlichen Aufbauten lassen sich verschiedene Effekte erzielen um die benötigte Abstrahlungscharakteristik zu erreichen.

### Offenbarung der Erfindung

### Vorteile der Erfindung

Durch die erfindungsgemäße Überwachungseinrichtung bzw. das Verfahren, lassen sich Fehlwarnungen insbesondere bei Kurvenfahrten wirksam unterdrücken. Das Detektionsfeld des Sensors im rückwärtigen Bereich wird bei der Erfindung so geformt, dass seine Grenze derart schräg von der Fahrzeughinterkante weg verläuft, dass ein folgendes Fahrzeug auf der gleichen Fahrspur nicht erfasst wird, aber ein Objekt, welches bewegt oder stationär sein kann, auf einer benachbarten Fahrspur sicher detektiert wird. Mit der Erfindung sind komplizierte und meist mehrdeutige Auswertealgorithmen, insbesondere bei kritischen Situationen, wie z. B. Kurvenfahrten auf mehrspurigen Fahrbahnen nicht notwendig. Es ist auch keine Zusatzsensorik erforderlich zur Prüfung, ob ein Fahrzeug auf derselben Fahrspur folgt, z. B. Sensoren, die vom Fahrzeugheck weg nach hinten gerichtet sind. Es können unterschiedlichste Typen als Sensoren verwendet werden, da die Strahlungscharakteristik nicht ausschließlich vom Sensor bestimmt wird, sondern von Formmitteln, die vorzugsweise vor und/oder seitlich des Sensors angeordnet sind. Damit muss ein Sensor nicht mit aufwendigen Maßnahmen auf ein vorgegebenes Detektionsfeld getrimmt werden.

Bei Einsatz eines hornartigen, zur Vorzugsrichtung der Empfindlichkeit des Sensors unsymmetrischen Trichters zur Formung des Detektionsfeldes, lässt sich eine gewünschte Begrenzung des Detektionsfeldes auf einfache Weise erreichen.

Eine ebenfalls besonders einfache Maßnahme zur Formung des Detektionsfeldes ergibt sich durch den Einsatz eines Beugungsgitters. Dieses kann auch zusammen mit dem behandelten Trichter verwendet werden.

Als Sensoren können sowohl Ultraschall- oder Radarsensoren eingesetzt werden, denen die Mittel zur Formung des Detektionsfeldes einfach vorgelagert werden können.

Bei Verwendung eines Trichters gibt es zahlreiche Formparameter, mit denen eine Optimierung des Detektionsfeldes erzielt werden kann, z. B. die Trichterbreite, die Trichterhöhe, der Versatz gegenüber der Vorzugsrichtung der Empfindlichkeit des Sensors, der Versatzwinkel gegenüber der Oberfläche des Sensors und/oder der Krümmungsverlauf des Trichters.

Bei Verwendung eines Beugungsgitters kann als Formparameter die Gittermaschenweite und/oder die Gitterstärke berücksichtigt werden. Eine einfache Beeinflussung zur Unterdrückung der Erfassung eines folgenden Fahrzeugs auf der gleichen Fahrspur ist eine kontinuierliche Variation der Gittermaschenweite in horizontaler Richtung, d. h. parallel zur Ebene der Fahrbahn.

Bei der Verwendung weiterer Sensoren auf der gleichen Fahrzeugseite können diese gleichartig aufgebaut sein. Lediglich der Sensor im rückwärtigen Bereich des Fahrzeugs muss mit den Mitteln zur Formung des Detektionsfeldes ausgestattet werden.

Die Mittel zur Formung des Detektionsfeldes können vorteilhafter Weise darin bestehen, das mindestens zwei Sensoren mit Signalen unterschiedlicher Phase beaufschlagt werden und die Formung des Detektionsfeldes durch Überlagerung der Strahlungsfelder dieser mindestens zwei Sensoren zustande kommt.

### Beschreibung der Zeichnungen

Ausführungsbeispiele der Erfindung sind in den Zeichnungen dargestellt und in der nachfolgenden Beschreibung näher erläutert. Es zeigen:
- Figur 1: die herkömmlichen Detektionkeulen von Sensoren eines Fahrzeugs in Bezug zu einem Folgefahrzeug im Kurvenbereich,
- Figur 2: die nach der Erfindung geformten Detektionsfelder von Sensoren eines Fahrzeugs in Bezug zu einem Folgefahrzeug im Kurvenbereich,
- Figur 3: die Frontansicht eines detektionsfeldformenden Trichters,
- Figur 4: die Seitenansicht des detektionsfeldformenden Trichters,
- Figur 5: ein Beugungsgitter zur Detektionsfeldformung,
- Figur 6: die sich ausbreitende Wellenfront und ihre Überlagerung im Fernfeld bei Einsatz des Beugungsgitters gemäß Figur 5.

### Ausführungsformen der Erfindung

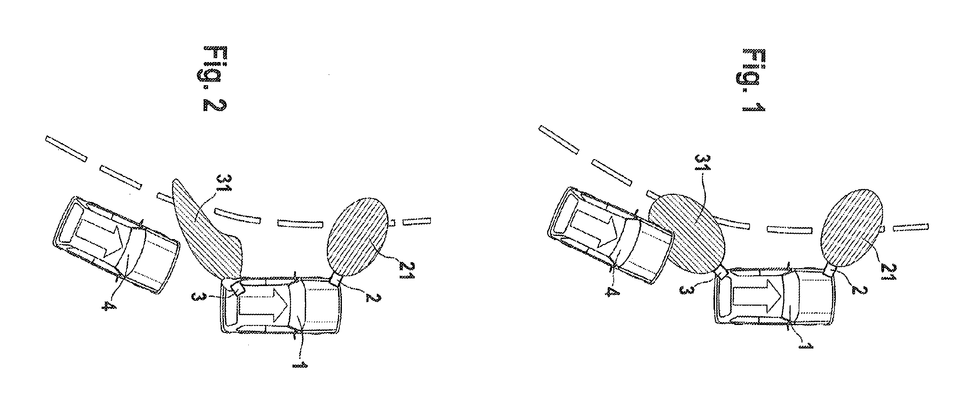

Figur 1 zeigt die Situation eines Fahrzeugs 1 im Kurvenverlauf einer Fahrspur mit einem herkömmlichen Side-View-Assistant SVA bestehend aus zwei Sensoren 2 und 3 im Seitenbereich des Fahrzeugs 1. Der Sensor 2 befindet sich an oder in der Nähe der vorderen Fahrzeugecke. Sein Detektionsfeld 21 geht mehr zur Seite als nach vorne. Der Sensor 3 befindet sich an oder in der Nähe der hinteren Fahrzeugecke auf der gleichen Fahrzeugseite. Sein Detektionsfeld 31 besitzt eine Strahlrichtungskomponente zur Seite wie auch nach hinten, wobei die Komponente nach hinten dominiert. Bewegt sich ein Fahrzeug 4 im Detektionsfeld 31, z. B. bei Ultraschall, der Ultraschalldetektionskeule, des hinteren Sensors 3, so wird das SVA-System eine Tote-Winkel-Warnung ausgeben. Handelt es sich dabei um ein überholendes Fahrzeug auf der benachbarten Fahrspur, so ist eine Warnung erwünscht. Allerdings kann eine Warnung auch dann auftreten, wenn das Fahrzeug 1 in einer Kurve von einem anderen Fahrzeug 4 auf derselben Spur verfolgt wird. Der Grund ist das ungünstige Detektionsfeld 31, insbesondere bei einer Kurvenfahrt, die das verfolgende Fahrzeug 4 fälschlicherweise detektiert.

Figur 2 zeigt die gleiche Fahrsituation wie in Figur 1, allerdings nun mit erfindungsgemäßer Formung des Detektionsfeldes 31 des Sensors 3. Die Formung des Detektionsfeldes 31 erfolgt so, dass die Grenze des Detektionsfeldes 31 des Sensors 3 im rückwärtigen Bereich derart schräg von der Fahrzeughinterkante weg verläuft, dass ein folgendes Fahrzeug 4 auf der gleichen Fahrspur nicht erfasst wird, aber ein Objekt, z. B. ein überholendes Fahrzeug auf einer benachbarten Fahrspur, detektiert wird. D. h. Die Strahlrichtungskomponente zur Seite wird im Wesentlichen beibehalten, die Komponente nach hinten wird unsymmetrisch weg vom folgenden Fahrzeug 4 gelenkt. Wie aus Figur 2 ersichtlich, trifft die Grenze des Detektionsfeldes 31 des Sensors 3 am Fahrzeug 1 selbst bei einer Kurvenfahrt nicht das folgende Fahrzeug 4 auf derselben Fahrspur. Erst ein Fahrzeug auf einer Nachbarspur wird wieder detektiert.

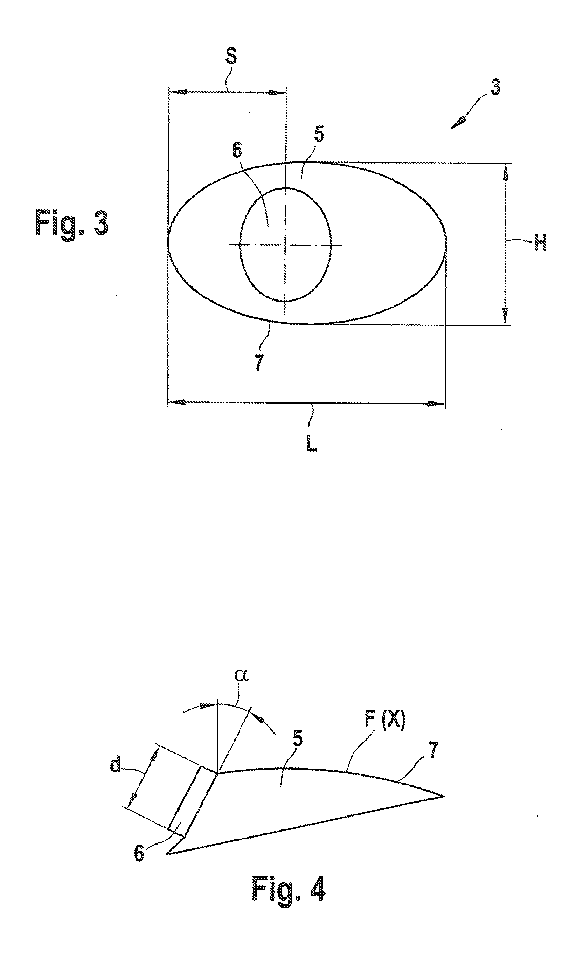

Als Mittel zur Formung des Detektionsfeldes 31 eignet sich vorteilhaft ein hornartiger, zur Vorzugsrichtung der Empfindlichkeit des Sensors 3 unsymmetrischer Trichter 5, dessen beispielhafte Ausprägung in Figur 3 in einer Frontansicht und in Figur 4 in einer Seitenansicht dargestellt ist. Bei einer Ausgestaltung des Sensors 3 als Ultraschallsensor befindet sich die Membran 6 des Sensors 3 innerhalb des Trichters 5, vorzugsweise an dessen Grundöffnung. Der äußere elliptische Trichterrand 7 liegt versetzt zur Membran 6. Als Formparameter für den Trichter 5 zur Optimierung des Detektionsfeldes 31 kann seine Höhe H, seine Breite L, der Versatz S der Sensormembran 6 gegenüber dem Trichterrand 7, der Durchmesser d der Sensormembran 6, der Einbauwinkel (Versatzwinkel) α des Trichters 5 gegenüber der Sensormembran (Oberfläche des Sensors) 6 und/oder sein Krümmungsverlauf F (x) berücksichtig werden. Anstelle eines Ultraschallsensors kann auch ein Radarsensor verwendet werden. Der Trichter 5 wirkt dann ähnlich einer Mikrowellenhornantenne.

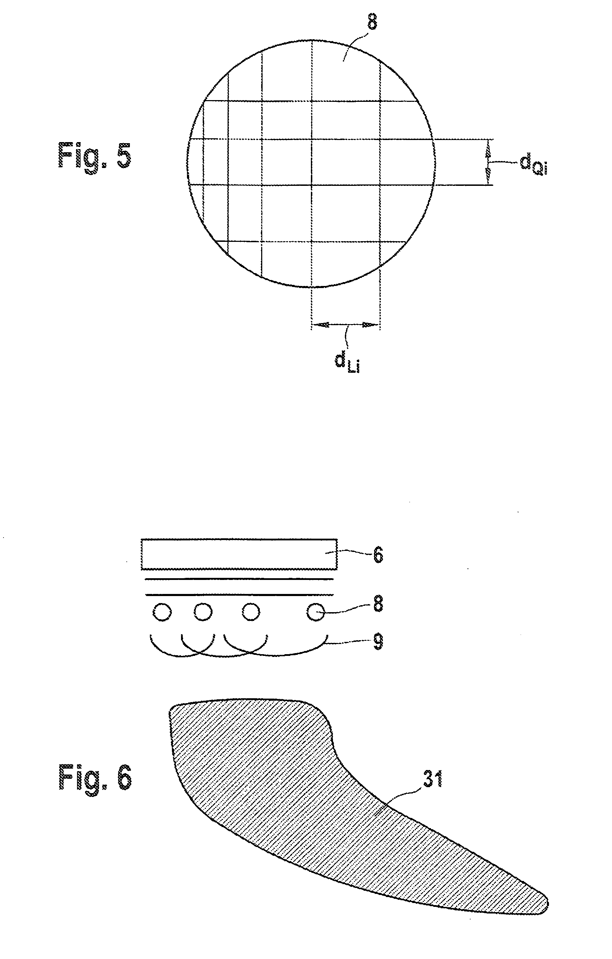

Eine weitere Ausgestaltung zur Formung des Detektionsfeldes ist in Figur 5 dargestellt. Die Mittel zur Formung des Detektionsfeldes 31 bestehen aus einem Beugungsgitter 8. das sich bei einem Ultraschallsensor vor dessen Sensormembran befindet. Als Gitterparameter und damit als Formparameter für das Detektionsfeld des Sensors dienen die Gittermaschenweite d_{Q}; in Querrichtung und die Gittermaschenweite d_{Li} in Längsrichtung sowie die Stärke des Gitters. Bei dem in Figur 5 dargestellten Ausführungsbeispiel variiert die Gittermaschenweite in horizontaler Richtung (Längsrichtung) kontinuierlich, d. h. vom linken zum rechten Rand hin wird der Abstand der Gitterlinien immer größer.

Beim Ausführungsbeispiel gemäß Figur 6 ist die Sensormembran 6 dargestellt und das davor befindliche Beugungsgitter 8 der Figur 5. Davor ist schematisch die Weilenfront 9 mit unterschiedlichen Teilwellen dargestellt, die sich im Fernfeld überlagern, so dass sich letztendlich das Detektionsfeld 31 einstellt.

Die Formmittel Trichter und Beugungsgitter können auch miteinander kombiniert werden.

Die Mittel zur Formung des Detektionsfeldes können auch darin bestehen, dass mindestens zwei Sensoren mit Signalen unterschiedlicher Phase beaufschlagt werden und die Formung des Detektionsfeldes durch Überlagerung der Strahlungsfelder dieser mindestens zwei Sensoren zustande kommt. Durch Überlagerung gleich- und gegenphasiger Signalkomponenten im Fernfeld kann das gewünschte unsymmetrische Detektionsfeld erzielt werden. Diese Ausführungsvariante eignet sich insbesondere für Radarsensoren.

Da bei der Erfindung lediglich Formmittel zur Beeinflussung des Detektionsfeldes vor den eigentlichen Sensoren eingebracht werden, kann für den Sensor 2 im vorderen Bereich der gleiche Sensortyp wie für den Sensor 3 im rückwärtigen Bereich verwendet werden.

Die erfindungsgemäße Überwachungseinrichtung bzw. das Verfahren lässt sich sowohl für Geradeausfahrten als auch für Kurvenfahrten oder Kreisverkehr einsetzen. Sie eignet sich vorzugsweise für "Blind-Spot-Detection",BSD, oder "Side-View-Assistant" ,SVA, oder auch zur Abdeckung des Nahbereichs bei Spurwechselassistenten (Lane Change Aid).

## Patentansprüche

1. Überwachungseinrichtung für den Toten Winkel bei Fahrzeugen mit mindestens einem Sensor (3) im rückwärtigen Bereich eines Fahrzeugs, **dadurch gekennzeichnet, dass** dem Sensor (3) zusätzliche Mittel (5, 8) zur Formung des Detektionsfeldes (31) vorgelagert sind, wobei die Mittel (5, 8) zur Formung des Detektionsfeldes (31) einen hornartigen, zur Vorzugsrichtung der Empfindlichkeit des Sensors unsymmetrischen Trichter (5) umfassen, wobei der Sensor (3) innerhalb des Trichters (5), vorzugsweise an dessen Grundöffnung, angeordnet ist und ein äußerer, elliptischer Trichterrand (7) versetzt zu dem Sensor (3) liegt, wodurch ein Detektionsfeld (31) ausgebildet wird, das in seinem rückwärtigen Bereich so geformt ist, dass die rückwärtige Grenze des Detektionsfeldes (31) derart schräg von der Fahrzeughinterkante weg verläuft, dass ein folgendes Fahrzeug (4) auf der gleichen Fahrspur nicht erfasst wird, aber ein Objekt auf einer benachbarten Fahrspur detektiert wird.

2. Einrichtung nach Anspruch 1, **dadurch gekennzeichnet, dass** ein Beugungsgitter (8) zur Formung des Detektionsfeldes (31) des Sensors (3) vorgesehen ist.

3. Einrichtung nach einem der Ansprüche 1 oder 2, **dadurch gekennzeichnet, dass** als Sensor (3) ein Ultraschallsensor oder eine Radarsensor eingesetzt ist.

4. Einrichtung nach einem der Ansprüche 2 oder 3, **dadurch gekennzeichnet, dass** als Formparameter für den Trichter (5) seine Breite, seine Höhe, sein Versatz gegenüber der Vorzugsrichtung der Empfindlichkeit des Sensors (3), sein Versatzwinkel gegenüber der Oberfläche des Sensors (3) und/oder sein Krümmungsverlauf berücksichtigt ist.

5. Einrichtung nach einem der Ansprüche 3 bis 5, **dadurch gekennzeichnet, dass** als Formparameter für das Beugungsgitter (8) die Gittermaschenweite und/oder die Gitterstärke berücksichtigt ist.

6. Einrichtung nach einem der Ansprüche 2 bis 5, **dadurch gekennzeichnet, dass** die Gittermaschenweite in horizontaler Richtung kontinuierlich variiert.

7. Einrichtung nach einem der Ansprüche 1 bis 6, **dadurch gekennzeichnet, dass** die Mittel (5, 8) zur Formung des Detektionsfeldes (31) des Sensors (3) darin bestehen, dass mindestens zwei Sensoren mit Signalen unterschiedlicher Phase beaufschlagbar sind, und die Formung des Detektionsfeldes (31) durch Überlagerung der Strahlungsfelder dieser mindestens zwei Sensoren zustande kommt.

8. Einrichtung nach einem der Ansprüche 1 bis 7, **dadurch gekennzeichnet, dass** neben dem/den Sensor/en im rückwärtigen Bereich des Fahrzeugs ein weiterer gleichartiger Sensor (2) im mittleren bis vorderen Bereich des Fahrzeugs (1) auf der gleichen Fahrzeugseite verbaut ist, der jedoch nicht mit Mitteln zur Formung seines Detektionsfeldes ausgestattet ist.

9. Verfahren zur Überwachung des toten Winkels bei Fahrzeugen unter Verwendung mindestens einer Überwachungseinrichtung nach einem der vorhergehenden Ansprüche mit einem Sensor (3) im rückwärtigen Bereich des Fahrzeugs (1), **dadurch gekennzeichnet, dass** das Detektionsfeld (31) des Sensors (3) im rückwärtigen Bereich so geformt wird, dass die Grenze des Detektionsfeldes (31) derart schräg von der Fahrzeughinterkante weg verläuft, dass ein folgendes Fahrzeug (4) auf der gleichen Fahrspur nicht erfasst wird, aber ein Objekt auf einer benachbarten Fahrspur detektiert wird.

## Claims

1. Monitoring device for the blind spot of vehicles, having at least one sensor (3) in the rear region of a vehicle, **characterized in that** means (5, 8) which are additional to the sensor (3) and have the purpose of shaping the detection field (31) are mounted in front, wherein the means (5, 8) for shaping the detection field (31) comprise a horn-like funnel (5) which is asymmetrical with respect to the preferred direction of sensitivity of the sensor, wherein the sensor (3) is arranged inside the funnel (5), preferably at the base opening thereof, and an outer, elliptical funnel edge (7) is located offset with respect to the sensor (3), as a result of which a detection field (31) is formed which is shaped in its rear region in such a way that the rear boundary of the detection field (31) extends obliquely away from the rear edge of the vehicle in such a way that a following vehicle (4) on the same lane is not sensed, but an object on an adjacent lane is detected.

2. Device according to Claim 1, **characterized in that** a diffraction grating (8) for shaping the detection field (31) of the sensor (3) is provided.

3. Device according to one of Claims 1 or 2, **characterized in that** an ultrasonic sensor or a radar sensor is used as a sensor (3).

4. Device according to one of Claims 2 or 3, **characterized in that** the width or height of the funnel (5) or the offset thereof with respect to the preferred direction of sensitivity of the sensor (3), the offset angle thereof with respect to the surface of the sensor (3) and/or the curvature profile thereof are/is taken into account at shaping parameters for said funnel (5).

5. Device according to one of Claims 3 to 5, **characterized in that** the grating mesh width and/or the grating strength is taken into account as a shaping parameter/shaping parameters for the diffraction grating (8).

6. Device according to one of Claims 2 to 5, **characterized in that** the grating mesh width varies continuously in the horizontal direction.

7. Device according to one of Claims 1 to 6, **characterized in that** the means (5, 8) for shaping the detection field (31) of the sensor (3) comprises at least two sensors being subjected to signals with different phases and the shaping of the detection field (31) being brought about by superimposing the radiation field of these at least two sensors.

8. Device according to one of Claims 1 to 7, **characterized in that** in relation to the sensor/sensors in the rear region of the vehicle, a further sensor (2) of the same type is installed in the central to front region of the vehicle (1) on the same side of the vehicle, which sensor (2) is, however, not equipped with means for shaping its detection field.

9. Method for monitoring the blind spot of vehicles by using at least one monitoring device according to one of the preceding claims, having a sensor (3) in the rear region of the vehicle (1), **characterized in that** the detection field (31) of the sensor (3) in the rear region is shaped in such a way that the boundary of the detection field (31) extends obliquely away from the rear edge of the vehicle in such a way that a following vehicle (4) on the same lane is not sensed but an object on an adjacent lane is detected.

## Revendications

1. Dispositif de surveillance de l'angle mort sur des véhicules automobiles, comprenant au moins un capteur (3) dans la zone arrière d'un véhicule, **caractérisé en ce que** des moyens (5, 8) supplémentaires destinés à former le champ de détection (31) sont montés devant le capteur (3), les moyens (5, 8) destinés à former le champ de détection (31) comprenant un entonnoir (5) asymétrique de type trompe vers la direction prédominante de la sensibilité du capteur, le capteur (3) étant disposé à l'intérieur de l'entonnoir (5), de préférence au niveau de l'ouverture de sa base, et un bord d'entonnoir (7) elliptique extérieur étant décalé par rapport au capteur (3), ce qui met en forme un champ de détection (31) dont la zone vers l'arrière est formée de telle sorte que la limite vers l'arrière du champ de détection (31) s'éloigne en biais du bord arrière du véhicule de manière à ce qu'un véhicule (4) suiveur sur la même bande de circulation n'est pas détecté, mais qu'un objet sur une bande de circulation voisine est détecté.

2. Dispositif selon la revendication 1, **caractérisé en ce qu'**il est prévu une grille de diffraction (8) pour la mise en forme du champ de détection (31) du capteur (3).

3. Dispositif selon l'une des revendications 1 ou 2, **caractérisé en ce que** le capteur (3) utilisé est un capteur à ultrasons ou un capteur radar.

4. Dispositif selon l'une des revendications 2 ou 3, **caractérisé en ce que** le paramètre de forme pris en compte pour l'entonnoir (5) est sa largeur, sa hauteur, son décalage par rapport à la direction prédominante de la sensibilité du capteur (3), son angle de décalage par rapport à la surface du capteur (3) et/ou le tracé de sa courbure.

5. Dispositif selon l'une des revendications 3 à 5, **caractérisé en ce que** le paramètre de forme pris en compte pour la grille de diffraction (8) est la largeur des mailles de la grille et/ou l'épaisseur de la grille.

6. Dispositif selon l'une des revendications 2 à 5, **caractérisé en ce que** la largeur des mailles de la grille varie continuellement dans le sens horizontal.

7. Dispositif selon l'une des revendications 1 à 6, **caractérisé en ce que** les moyens (5, 8) de mise en forme du champ de détection (31) du capteur (3) consistent **en ce que** des signaux ayant des phases différentes peuvent être appliqués à au moins deux capteurs et la mise en forme du champ de détection (31) est concrétisée en superposant les champs de rayonnement de ces au moins deux capteurs.

8. Dispositif selon l'une des revendications 1 à 7, **caractérisé en ce qu'**en plus du/des capteur(s) dans la zone arrière du véhicule, un capteur (2) supplémentaire du même type est monté dans la zone du centre vers l'avant du véhicule (1) sur le même côté du véhicule, lequel n'est cependant pas doté de moyens de mise en forme de son champ de détection.

9. Procédé de surveillance de l'angle mort sur des véhicules automobiles en utilisant au moins un dispositif de surveillance selon l'une des revendications précédentes avec un capteur (3) dans la zone arrière du véhicule (1), **caractérisé en ce que** le champ de détection (31) du détecteur (3) dans la zone arrière est mis en forme de telle sorte que la limite du champ de détection (31) s'éloigne en biais du bord arrière du véhicule de manière à ce qu'un véhicule (4) suiveur sur la même bande de circulation n'est pas détecté, mais qu'un objet sur une bande de circulation voisine est détecté.
